Europäisches Patentamt

European Patent Office

Office européen des brevets

(19)

(11) Publication number: **0 079 973**
**B1**

# EUROPEAN PATENT SPECIFICATION

(45) Date of publication of patent specification: **18.03.87**

(21) Application number: **81109784.9**

(22) Date of filing: **19.11.81**

(51) Int. Cl.⁴: **B 29 C 67/12, B 60 R 13/02,**
**B 60 R 19/02**

(54) Extrusion/injection molding of trimmed product.

(43) Date of publication of application:
**01.06.83 Bulletin 83/22**

(45) Publication of the grant of the patent:
**18.03.87 Bulletin 87/12**

(84) Designated Contracting States:
**AT BE CH DE FR GB IT LI LU NL SE**

(56) References cited:
**DE-A-1 480 109**
**DE-A-2 412 241**
**DE-U-1 739 287**
**FR-A-2 100 380**
**FR-A-2 237 783**
**GB-A-1 276 842**

(73) Proprietor: **Voplex Corporation**
**1100 Pittsford-Victor Road**
**Pittsford New York 14534 (US)**

(72) Inventor: **vanManen, Dick T.**
**5155 Laura Lane**
**Canandaigua New York (US)**

(74) Representative: **Spott, Gottfried, Dr. et al**
**Sendlinger-Tor-Platz 11**
**D-8000 München 2 (DE)**

Courier Press, Leamington Spa, England.

**Description**

Trim strips are applied to automotive and other products to improve appearance. Available trim strip material, and especially metallized strips simulating polished metal, are formed on relatively flimsy polyester backing strips that must be bonded to supporting bases and often covered with protective coatings, see GB—A 1 276 842.

Often, trim strips are mounted with adhesives that delaminate after a while so that the trim strips come loose. Positioning the trim strips within an injection mold cavity for the final product has been carried out but the temperatures, pressures, movements, and stresses that occur within the mold cavity dislodge or damage the trim strip, see FR—A 2 237 783.

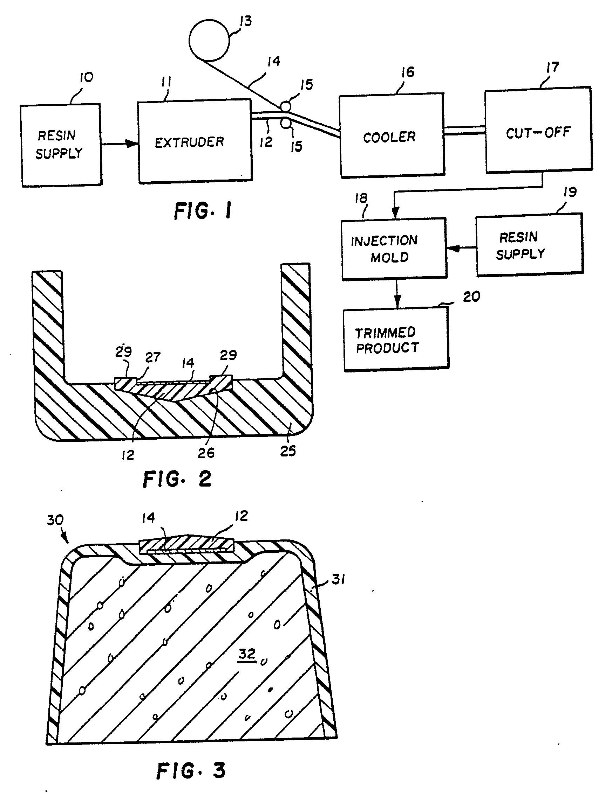

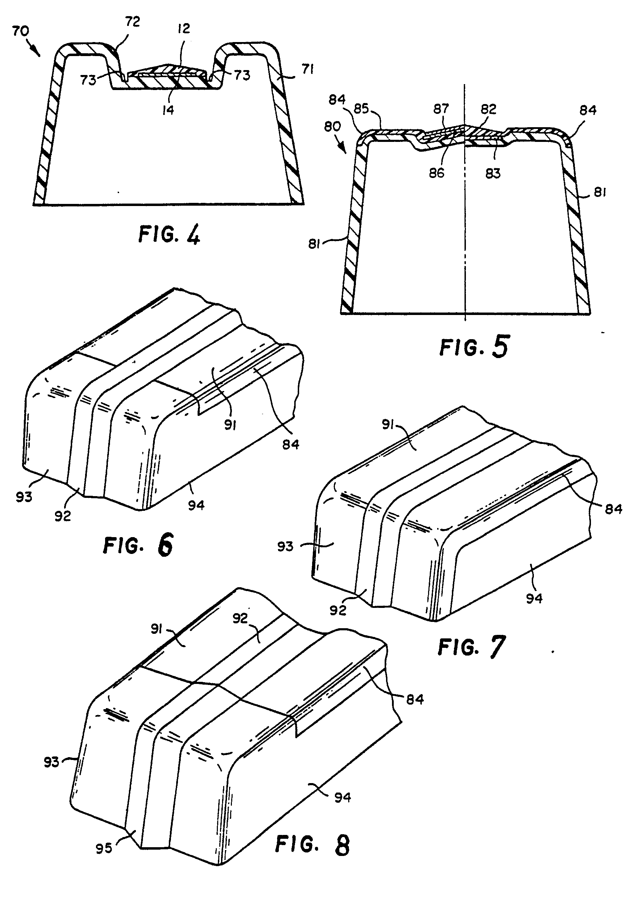

DE—A 2 412 241 shows in Figure 1 already a composite product in the shape of a bumper for passenger cars, however, in this case an invisible filler body 5 shaped as a tube has been employed in order to achieve for the composite product a wall thickness as small as possible even in the areas of the composite product which have to be reinforced on account of statics. In such a way expensive plastic material shall be saved. However, such invisible filler bodies — Figure 5 shows another kind of the filler bodies — have nothing in common with the visible trim strips and their way of fastening to a conventional composite product as for instance a decorative product like a bumper.

The instant invention now solves the above problems with a method of producing an automobile bumper having an externally visible trim strip, characterized by the process steps of extruding a supporting base part as a base for a separately fed trim strip, connecting the supporting base part with the trim strip by pressure rolling, by hot stamping or by other continuous process, cooling the composite product consisting of the trim strip and the supporting base part and cutting into predetermined lengths, inserting a predetermined length into a recess in a wall of a mold cavity, and filling the mold cavity, into which the predetermined length was inserted, with plastics material for producing the bumper.

A preferred embodiment of this method includes forming the supporting base with side edges that engage said mold and position said supporting base and said trim strip within said mold and filling the bumper with a foamed resin material.

The method according to the invention is economical and efficient and leads to a better result at a lower cost, namely to an automobile bumper having a trim strip which is effectively mounted in place with a secure bond that will not delaminate during its working life.

Drawings:
Figure 1 is a schematic diagram of the process steps according to the invention,
Figure 2 is a partially schematic cross-sectional view of a mold part shaped to hold a trim strip and form an automobile bumper according to the instant method;
Figure 3 is a cross-sectional view of a molded automobile bumper having a trim strip prepared according to the method of the invention;
Figures 4 and 5 are cross-sectional views of alternative molded bumpers made according to the invention; and
Figures 6 to 8 are perspective views of preferred alternatives for molded corners for automotive bumpers made according to the invention.

The invention uses extrusion technology to form a supporting base for a decorative trim strip, and gives the base the proper dimensions and characteristics so that it can position and protect the trim strip within an injection mold where the trimmed bumper is made.

It is relatively easy to bond trim strips to extrusions by pressing a trim strip material against a freshly extruded supporting base, hot stamping a trim strip to an extrusion, combining the trim strip with a cross head extrusion, or sandwiching a trim strip between extruded layers. Since trim strip material is available in indefinite linear lengths and extrusions maintain a uniform cross section for indefinite lengths, the two can be combined without difficulty.

If the supporting base is given the proper dimensions and contours and is formed of proper materials, it can be positioned accurately within an injection mold cavity and held in place during injection molding. The mold cavity is shaped to receive and hold the contoured supporting base; and the material of the supporting base not only locates the trim strip, but protects it from damage from heat, erosion, and material flow during injection molding. A cut-off length of an extruded supporting base bearing a trim strip can also be bent or shaped to fit within a positioning recess in an injection mold cavity to follow the surface recess in an injection mold cavity to follow the surface contours of many different shapes for the final product.

Selecting proper resin materials for the supporting base and the injection molded product can produce a secure bond between the two without damage or detriment to either component. This can make the trim strips secure and long lasting and can also secure them in place cheaply and efficiently compared to present alternatives.

The steps of the inventive method are schematically illustrated in Figure 1 beginning with a resin supply 10 feeding an extruder 11 that forms a supporting base 12. A supply reel 13 feeds a trim strip 14 into engagement with supporting base 12 so that the two can be bonded together by pressure rollers 15. Cooler 16 then cools the trimmed extrusion, which passes to a cut-off machine 17 for cutting the extrusion into suitable lengths. These are positioned within an injection mold 18 supplied with another resin from supply 19 to produce the extrusion and injection molded trimmed product 20.

There are many different ways that are already known for applying a trim strip to an extrusion; and although this is conveniently done as the extrusion is formed, it can also be accomplished later. Suitable trim strip materials and resins for forming supporting bases are also generally known in the art. The supporting base can be an opaque material behind the back face of the trim strip or a clear material over the front face of the trim strip, or both.

Supporting base 12 preferably has a substantially larger cross-sectional area than decorative trim strip 14 to provide both mass and a suitable contour for locating and protecting the trim strip during injection molding. A multitude of shapes are possible and can be devised to accommodate mold cavities and molded products for different purposes.

One simple possibility is shown in Figure 2 where a supporting base 12 is contoured to fit in a recess 26 in a mold cavity 25 for injection molding an automobile bumper. Supporting base 12 also has a recess 27 carrying a decorative trim strip 14 that is visible through the clear resin material of support base 12. On opposite sides of recess 27 are raised surfaces 29 that partially melt and form a bonded interface with injection molded resin formed within the mold against surfaces 29. This mounts support base 12 and trim strip 14 securely in place on the molded bumper. Another mold part (not shown) co-operates with mold part 25 in a generally known way and is omitted to simplify the illustration.

A cross section of a molded resin bumper 30 made from the mold cavity of Figure 2 is shown in Figure 3. It includes a tough resinous shell 31 formed by injection molding or reaction injection molding, with trim strip 14 and its clear supporting base 12 bonded to the front face of bumper 30 for decorative purposes. A foamed resin 32 can fill and support shell 31 after the injection molding step if desired.

A cross section of an injection molded bumper 70 having a different contour is shown in Figure 4. Supporting base 12 of clear resinous material bearing trim strip 14 is arranged within a forward facing recess 72 in injection molded bumper shell 71. Locator grooves 73 formed along the edges of supporting base 12 help locate it in position during the injection molding step. Shell 71 can also be filled with foamed resin after injection molding.

The cross section of molded bumper 80 as shown in Figure 5 includes an injection molded shell 81 and illustrates two more alternative preferred embodiments. To the right of the center line, clear extrusion 82 supports a decorative trim strip 83 and extends to the corner 84 of bumper shell 81. On the left side of the center line, a colored extrusion 85 provides a decorative outer surface for bumper 80 and bears a contrasting trim strip 86 on its outer surface visible through an optional clear laminate 87 that can be formed as part of the extrusion. Forming extrusions as trim strips supporting bases wide enough to extend to the corners of bumper shells affords a large surface area for locating the extrusions within an injection mold cavity and supplies a very secure bond to the bumper shell. It also allows greater variation in decorating and enhancing the appearance of a bumper.

Using relatively wide extrusions extending to bumper corners 84 as shown in Figure 5 can be integrated into the wrap-around portions of bumpers in several ways as shown in Figures 6—8.

In the embodiment of Figure 6, corners are cut out of the extruded supporting base 91 leaving only central region 92 bearing a trim strip to extend into the wrap-around portion 93 of molded bumper shell 94. Shading identifies the surface of bumper shell 94 as distinguished from extrusion 91.

In the embodiment of Figure 7, the entire decorative extrusion 91 is bent to fit the bumper wrap-around 93 and extends trim strip 92 around the ends of injection molded bumper shell 94.

In the embodiment of Figure 8, extrusion 91 is cut off to be limited to the forward face of the bumper; and the wrap-around portion 93 of bumper shell 94 has a contour 95 that extends the contour of the trim strip portion 92 of extrusion 91.

## Claims

1. A method of producing an automobile bumper having an externally visible trim strip, characterized by the following process steps:
— extruding a supporting base part (12, 82, 87, 91) as a base for a separately fed trim strip (14, 83, 86),
— connecting the supporting base part with the trim strip by pressure rolling (rollers 15), by hot stamping or by other continuous process,
— cooling (cooler 16) the composite product consisting of the trim strip (14) and the supporting base part (12) and cutting into predetermined lengths (cut-off device 17),
— insering a predetermined length into a recess (26) in a wall of a mold cavity (25), and
— filling the mold cavity (25) into which the predetermined length was inserted, with plastics material for producing the bumper (30, 70, 80, 94).

2. The method of claim 1 including forming said supporting base (12, 82, 87, 91) with side edges that engage said mold (25) and position said supporting base and said trim strip (14, 83, 86) within said mold.

3. The method of claim 1 including filling said bumper with a foamed resin material.

## Patentansprüche

1. Verfahren zur Herstellung einer Fahrzeugstoßstange mit einer außen sichtbaren Zierleiste, gekennzeichnet durch folgende Verfahrensstufen:
— Extrudieren eines Trägerbasisteils (12, 82, 87, 91) als Basis für eine getrennt zugeführte Zierleiste (14, 83, 86),

— Verbinden des Trägerbasisteils mit der Zierleiste durch Druckwalzen (Walzen 15), durch Heißpressen oder durch ein anderes kontinuierliches Verfahren,

— Abkühlen (Kühler 16) des Verbundkörpers aus der Zierleiste (14) und dem Trägerbasisteil (12) und Abschneiden auf vorbestimmte Längen (Abschneidevorrichtung 17),

— Einlegen einer vorbestimmten Länge in eine Ausnehmung (26) in einer Wand eines Hohlraums einer Form (25) und

— Auffüllen des Hohlraums der Form (25), in welche die vorbestimmte Länge eingelegt ist, mit einem Kunstsoffmaterial zur Herstellung der Stoßstange (30, 70, 80, 94).

2. Verfahren nach Anspruch 1, dadurch gekennzeichnet, daß man an das Trägerbasisteil (12, 82, 87, 91) Seitenkanten anformt, die Form (25) eingreifen und dieses Trägerbasisteil und die Zierleiste (14, 83, 86) in der Form halten.

3. Verfahren nach Anspruch 1, dadurch gekennzeichnet, daß man die Stoßstange mit einem geschäumten Harzmaterial füllt.

**Revendications**

1. Une méthode de fabrication d'un pare-chocs pour automobile ayant une bande décorative visible à l'extérieur, méthode caractérisée en ce qu'on effectue les opérations suivantes:

— on extrude un élément de base de support (12, 82, 97, 91) servant de base pour une bande décorative alimentée séparément (14, 83, 86),

— on assemble l'élément de base de support et la bande décorative par pression au moyen de rouleaux (rouleaux 15), par emboutissage à chaud ou par un autre procédé en continu,

— on refroidit (dispositif de refroidissement 16) le produit composite constitué par la bande décorative (14) et l'élément de base de support (12) puis on coupe en longueurs prédéterminées (dispositif à couteau 17),

— on introduit une longueur pré-déterminée dans un creux (26) dans une paroi d'une cavité moulée (25), et

— on remplit la cavité moulée (25) dans laquelle la longueur pré-déterminée a été introduite, avec des matières plastiques utilisées pour la fabrication de pare-chocs (30, 70, 80, 94).

2. La méthode de la revendication 1 comprenant le formage de ladite base de support (12, 82, 87, 91) avec des bords latéraux s'engagement dans ledit moule (25) et plaçant ladite base de support et ladite bande décorative (14, 83, 86) dans ledit moule.

3. La méthode de la revendication 1 comprenant le garnissage dudit pare-chocs avec une matière résineuse expansée.

0 079 973

FIG. 1

FIG. 2

FIG. 3

FIG. 4

FIG. 5

FIG. 6

FIG. 7

FIG. 8